(19) Europäisches Patentamt

European Patent Office

Office européen des brevets

(11) **EP 1 455 401 A2**

(12) **EUROPEAN PATENT APPLICATION**

(43) Date of publication:
**08.09.2004 Bulletin 2004/37**

(51) Int Cl.7: **H01M 4/48**, H01M 4/50

(21) Application number: **04004869.6**

(22) Date of filing: **02.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **03.03.2003 JP 2003055387**

(71) Applicant: **NGK INSULATORS, LTD.
Nagoya-City, Aichi Prefecture 467-8530 (JP)**

(72) Inventors:
• **Takahashi, Michio, c/oNGK Insulators, Ltd.
Nagoya-city Aichi prefecture 467-8530 (JP)**
• **Kitoh, Kenshin, c/oNGK Insulators, Ltd.
Nagoya-city Aichi prefecture 467-8530 (JP)**

(74) Representative: **Vollnhals, Aurel
Tiedtke-Bühling-Kinne & Partner (GbR),
TBK-Patent,
Bavariaring 4
80336 München (DE)**

(54) **Lithium secondary battery**

(57) A lithium secondary battery with improved internal resistance and discharge capacity maintenance and being simple in structure and inexpensive. A lithium secondary battery comprises a positive active material comprising a lithium aluminum manganese oxide having a spinel structure and an aluminum compound other than the lithium aluminum manganese oxide. A ratio of an amount of aluminum contained in the aluminum compound to a total amount of aluminum contained in the positive active material is within a range of 1% by weight or more to 50% by weight or less. The lithium aluminum manganese oxide is represented by a general formula $Li_{1+x}Al_yMn_{2-x-y}O_4$ wherein x and y denote constituting ratios of elements in one molecule, $x \geq 0$, $y \geq 0.01$, and has a lattice constant of 8.245 Å or less. A part of Mn may be replaced with an element other than Li and Al.

FIG.1

**Description**

BACKGROUND OF THE INVENTION

Field of the Invention

The present invention relates to a lithium secondary battery, more particularly to a lithium secondary battery which is superior in the suppression of increasing internal resistance ratio and discharge capacity maintenance ratio and which is simple in structure and which is inexpensive.

Description of the Related Art

In recent years, miniaturizing/lightening of portable electronic appliances such as a cellular phone, VTR, and notebook type personal computer has advanced in an accelerating manner, and as a battery for power source, a secondary battery has been used in which a lithium transition element composite oxide is used in a positive active material, a carbon material is used in a negative active material, and an organic electrolytic solution obtained by dissolving a lithium ion electrolyte in an organic solvent is used in an electrolytic solution.

This battery has generally been referred to as a lithium secondary battery or a lithium ion battery, and has characteristics that an energy density is large and a single battery voltage is also high as about 4 V. Therefore, the battery has drawn people's attentions not only as the portable electronic appliances but also as a power for driving a motor of an electric vehicle (hereinafter referred to as "EV") or a hybrid electric vehicle (hereinafter referred to as "HEV") which has positively and generally spread as a low pollution car in the background of recent environmental problems.

In the lithium secondary battery, battery properties including a battery capacity and charge/discharge cycle property largely depend on material properties of the positive active material for use. At present, lithium transition metal oxides such as lithium cobalt oxide ($LiCoO_2$), lithium nickel oxide ($LiNiO_2$) and lithium manganese oxide ($LiMn_2O_4$) have been used as the lithium composite oxide for use as the positive active material (see Documents 1 to 5 listed below, for example).

| Document No. | Identification of Document |
|---|---|
| 1 | JP-A-2001-180939 |
| 2 | JP-A-7-272765 |
| 3 | JP-A-2000-231921 |
| 4 | JP-A-11-171551 |
| 5 | JP-A-2001-48547 |

However, such related-art lithium transition metal oxide has a problem that the charge/discharge property of the lithium secondary battery at a high temperature is not sufficient. Therefore, the use of lithium aluminum manganese oxide has been proposed which is superior in the charge/discharge property of the lithium secondary battery at the high temperature and which is represented by a general formula $Li_{1+x}Al_yM_zMn_{2-x-y-z}O_4$ wherein M denotes at least one element other than lithium and aluminum, x, y, and z denote constituting ratios of the elements in one molecule, and $x \geq 0$, $y \geq 0.01$, $z \geq 0$).

The above-described lithium aluminum manganese oxide is superior in charge/discharge property, but a raw material containing an aluminum source needs to be sufficiently mixed and dispersed with respect to another raw material in synthesizing a compound as the raw material. Therefore, the manufacturing requires much labor and cost.

Moreover, all lithium aluminum manganese oxides represented by the general formula $Li_{1+x}Al_yM_zMn_{2-x-y-z}O_4$ have not been suitable as the positive active material of the lithium secondary battery.

The present invention has been developed in consideration of the problems of the related arts, and an object thereof is to provide a lithium secondary battery which is superior in suppression of increasing internal resistance ratio and discharge capacity maintenance ratio and which is simple in structure and inexpensive.

SUMMARY OF THE INVENTION

To achieve the above-described object, a lithium secondary battery of the present invention is a lithium secondary battery comprising: a positive active material comprising lithium aluminum manganese oxide having a spinel structure and an aluminum compound other than lithium aluminum manganese oxide, wherein a ratio of an amount of aluminum contained in the aluminum compound to a total amount of aluminum contained in the positive active material is within a range of from 1% by weight or more to 50% by weight or less, and lithium aluminum manganese oxide is represented by a general formula $Li_{1+x}Al_yMn_{2-x-y}O_4$ wherein x and y denote constituting ratios of the elements in one molecule, and $x \geq 0$, and $y \geq 0.01$, and has a lattice constant of 8.245 Å or less. (sometimes hereinafter referred to as "first invention").

Moreover, it is also preferable to use a positive active material containing a lithium aluminum manganese oxide being represented by a general formula $Li_{1+x}Al_yMn_{2-x-y}O_4$ wherein x, y have the same meanings mentioned above, and a part of Mn therein is replaced with at least one metal element (sometimes hereinafter referred to as "second invention").

Moreover, in the present invention (first and second inventions), the ratio of the aluminum amount contained in the aluminum compound to a total amount of aluminum contained in the positive active material is preferably within a range of from 1% by weight or more to 30% by weight or less, and the lattice constant of lithium aluminum manganese oxide is preferably 8.225 Å or less.

Furthermore, the positive active material for use in the present invention (first and second inventions) preferably contains boron and vanadium or either one. In this case, a molar ratio of boron and/or vanadium to manganese contained in the positive active material is preferably within a range of from 0.001 to 0.05.

Additionally, in the present invention, it is preferable that the positive active material is a product obtained by firing starting materials for a lithium aluminum manganese oxide under an oxidation atmosphere at 650 to 1000°C in 5 to 30 hours.

BRIEF DESCRIPTION OF THE DRAWINGS

FIG. 1 is a perspective view showing a structure of a wound type internal electrode body for use in one embodiment of a lithium secondary battery of the present invention (first invention);

FIG. 2 is a sectional view showing one embodiment of the lithium secondary battery of the present invention (first invention); and

FIG. 3 is a perspective view showing a structure of a lamination type internal electrode body for use in one embodiment of the lithium secondary battery of the present invention (first invention).

DESCRIPTION OF THE PREFERRED EMBODIMENT

An embodiment of the present invention will be described hereinafter, but the present invention is not limited to the following embodiment, and it is to be understood that the present invention is appropriately modified in design and improved based on usual knowledge of a person skilled in the art without departing from the scope of the present invention.

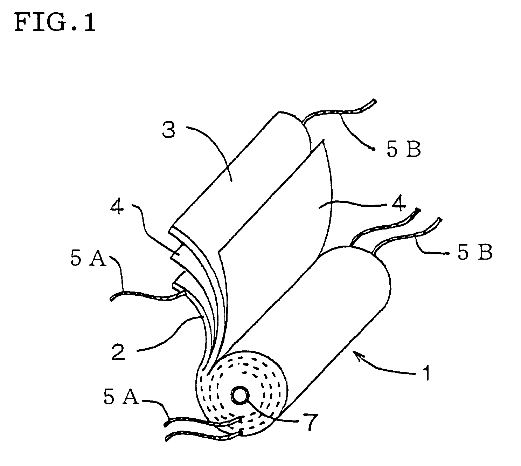

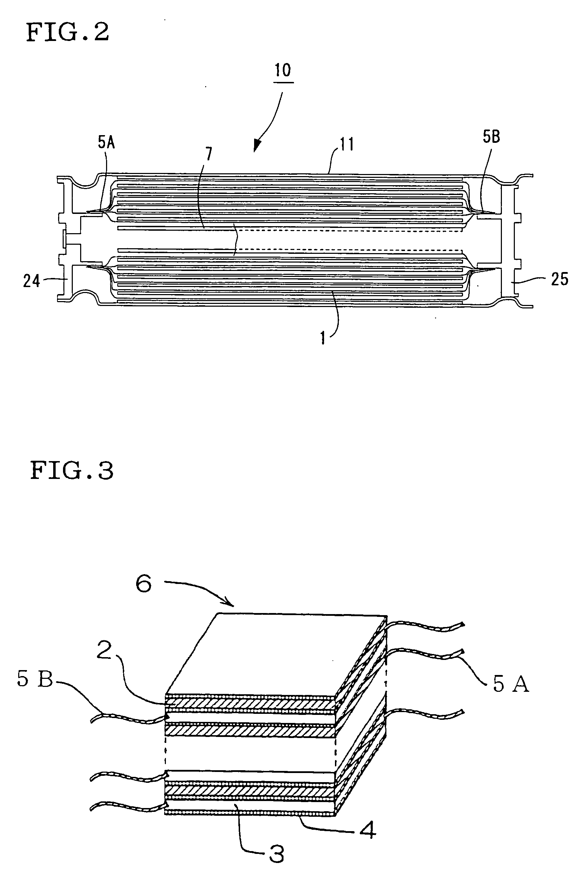

For the lithium secondary battery for use in the embodiment of the present invention, as shown in FIGS. 1 and 2, a positive electrode 2 prepared by coating opposite surfaces of a current collector substrate for positive electrode with a positive active material, and a negative electrode 3 prepared by coating the opposite surfaces of a current collector substrate for negative electrode with a negative active material are wound centering on a winding core 7 via a separator 4 interposed between both the electrodes to form an internal electrode body (wound type internal electrode body) 1. The body is inserted in a battery case 11 together with an electrolytic solution containing a lithium compound as an electrolyte. A plurality of positive electrode collection tabs 5A disposed in portions of the positive electrode 2 which are not coated with the positive active material are connected to a positive electrode lid 24, and a plurality of negative electrode collection tabs 5B disposed in portions of the negative electrode 3 which are not coated with the negative active material are connected to a negative electrode lid 25 to constitute each electrode.

The positive active material for use in the present embodiment contains lithium aluminum manganese oxide having a spinel structure, and an aluminum compound other than lithium aluminum manganese oxide. A ratio of an aluminum amount contained in the aluminum compound to a total amount of aluminum contained in the positive active material is within a range of from 1% by weight or more to 50% by weight or less. The lithium aluminum manganese oxide is preferably represented by the above-mentioned general formula represented by $Li_{1+x}Al_yMn_{2-x-y}O_4$ wherein x and y denote constituting ratios of elements in one molecule, $x \geq 0$, $y \geq 0.01$, and has a lattice constant of 8.245 Å or less.

When the ratio of the amount of aluminum contained in the aluminum compound to the total amount of aluminum contained in the positive active material is set to within a range of from 1% by weight or more to 50% by weight or less, an dissolution ratio of manganese into the electrolytic solution is reduced. For a lithium secondary battery 10 using the positive active material constituted in this manner, life is prolonged, and an increase in internal resistance ratio is also suppressed. When the ratio of the aluminum amount contained in the aluminum compound to the total amount of aluminum contained in the positive active material is less than 1% by weight, the dissolution ratio of manganese into the electrolytic solution rises, and an eluted manganese ion deteriorates the carbon material used as a negative active material. Moreover, the life of the lithium secondary battery 10 is shortened. For the positive active material represented by the formula by $Li_{1+x}Al_yMn_{2-x-y}O_4$ wherein x, and y have the same meanings mentioned above and containing no aluminum compound in a substantially amount, since the starting materials have to be sufficiently mixed, a manufacturing process becomes complicated, and cost increases. Here the expression containing no aluminum compound in a substantially amount means a lithium aluminum manganese oxide containing only a negligible amount the aluminum compound as an unavoidable impurity. When the ratio of the aluminum amount contained in the aluminum compound to the total amount of aluminum contained in the positive active material exceeds 50% by weight, the internal resistance ratio of the lithium secondary battery rises. In the present embodiment, the ratio of the aluminum amount contained in the aluminum compound to the total amount of aluminum contained in the positive active material is within a range of from 1% by weight or more to 50% by weight or less, but the ratio is further preferably within a range of from 1% by weight or more to 30% by weight or less.

As described above, the lithium aluminum manganese oxide represented by the general formula $Li_{1+x}Al_yMn_{2-x-y}O_4$ wherein x and y denote the constituting ratios of the respective elements in one molecule and has the lattice constant of 8.245 Å or less may be preferably used. By this constitution, the lithium secondary battery can be obtained in which the reduction in a discharge capacity during repeated charge/discharge cycle is little. When the lattice constant of the lithium aluminum manganese oxide exceeds 8.245 Å, a discharge capacity maintenance ratio of the lithium secondary battery is reduced. Therefore, a charged state cannot be maintained for a long period of time. Considering from a unit lattice capable of substantially forming the lithium aluminum manganese oxide, the lattice constant of the lithium aluminum manganese oxide needs to be 8.245 Å or less. Further preferably, the lattice constant of the lithium aluminum manganese oxide is 8.225 Å or less.

Moreover, in the present invention, the positive active material preferably contains boron (B) and vanadium (V) or either one, and a molar ratio of boron and/or vanadium contained in the lithium aluminum manganese oxide to manganese contained therein as a positive active material is preferably in a range of 0.001 to 0.05. It has been confirmed that by this constitution, various properties of the lithium secondary battery such as reduction of the manganese dissolution ratio, the reduction of increasing internal resistance ratio, and discharge capacity maintenance ratio are enhanced by experiments. A state in which boron and vanadium or either one is contained in the lithium aluminum manganese oxide as a positive active material may be a single element state or a compound state.

The present positive active material containing a lithium aluminum manganese oxide having specified lattice constant and represented by the above-mentioned general formula, and an aluminum compound in the specified amount (hereinafter sometimes referred to as the present positive active material) is preferably obtained by firing starting materials for lithium aluminum manganese oxide at 650 to 1000°C under an oxidation atmosphere in 5 to 30 hours. Here, the oxidation atmosphere means an atmosphere having an oxygen partial pressure at which an in-furnace sample causes an oxidation reaction in general, and concretely means the atmosphere, an oxygen atmosphere or the like.

The present positive active material can be manufactured in the following method.

As the starting materials, $Li_2CO_3$, $MnO_2$, and $Al_2O_3$ are used, and weighed at a predetermined ratio. After appropriately mixing the respective starting materials, an electric furnace or the like is used to fire the mixture of the starting materials under an oxidization atmosphere at 650 to 1000°C for 5 to 30 hours. Accordingly, thus produced positive active material contains a lithium aluminum manganese oxide ($Li_{1+x}Al_yMn_{2-x-y}O_4$) which is a target, and partially non-reacted aluminum compound such as $Al_2O_3$. When the firing temperature is less than 650°C, and/or the firing time is less than five hours, the reaction among the starting material does not proceed, and the lithium aluminum manganese oxide cannot be produced. Moreover, when the firing temperature exceeds 1000°C, and/or the firing time exceeds 30 hours, a substance having a high-temperature phase unfavorable as a positive active material is generated in addition to the lithium aluminum manganese oxide. Such a product is inferior in various properties such as the manganese dissolution ratio, internal resistance ratio, and discharge capacity maintenance ratio if it is used as a positive active material for the lithium secondary battery. Moreover, the present positive active material can be prepared simply at a low cost as compared with the conventional manufacturing method, because the starting materials do not have to be mixed sufficiently to ensure the complete reaction among them. The presence of non-reacted aluminum compound in the present positive active material may be confirmed by x-ray diffraction analysis.

For a material of the current collector substrate for the positive electrode, a material satisfactory in corrosion resistance to a positive electrode electrochemical reaction is preferably used, and preferable examples include a metal foil, punching metal and mesh of aluminum or titanium.

The positive electrode can be prepared, with a roll coater method or the like, by coating a slurry or paste prepared by adding a solvent and/or a binder to a powder of the present positive active material on the opposite surfaces of the current collector substrate for the positive electrode, and then drying the resultant. Thereafter, a press treatment or the like may also be performed if necessary.

As the material of the current collector substrate of the negative electrode, a material having good corrosion resistance to the electrochemical reaction of the negative electrode is preferably used, such as a copper foil, nickel foil and the like.

Moreover, as the negative active material, amorphous carbon materials such as soft carbon and hard carbon or highly graphitized carbon materials such as artificial graphite and natural graphite are preferably used. The negative electrode can be prepared by coating the opposite surfaces of the current collector substrate for the negative electrode with the negative active material in the same manner as that of the method for preparing the positive electrode.

Next, the separator 4 for preferable use in the lithium secondary battery of the present invention will be described. As the separator 4 shown in FIG. 1, either of the separator 4 having a large number of micropores and being provided with a shutdown function and the separator 4 without being provided with the shutdown function may be used.

As the separator 4 being provided with the shutdown function, a three layer structure obtained by sandwiching a lithium ion-transmittable polyethylene film (PE film) having large number of micropores between two sheets of lithium ion-transmittable polypropylene films (PP films) is preferably usable. For example, when the temperature inside the lithium secondary battery 10 (see FIG. 2) rises, the lithium ion-transmittable PE film having the micropores softens at about 130°C, the micropores are collapsed, and the movement of lithium ion, that is, a battery reaction is suppressed; thus, the separator functions also as a safety mechanism. Moreover, when the PE film is sandwiched between the PP films having higher softening point, the PP films retain shapes even in a case where the PE film softens. This prevents contact and short-circuiting between the positive electrode 2 and the negative electrode 3, and it is possible to reliably secure the battery reaction and to secure safety.

On the other hand, as the separator 4 without being provided with the shutdown function, the film formed of the material having the lithium ion transmittance is preferably usable. Concrete examples include a film formed of lithium ion-transmittable polyolefin (polypropylene, polyethylene, etc.), paper formed substantially of cellulose or cellulose derivative or a mixture of these, nonwoven cloth formed of fibrous polyolefin and the like.

For the positive electrode collection tabs 5A and negative electrode collection tabs 5B, foils formed of the same materials as those of the current collector substrates for these electrodes (positive electrode 2, negative electrode 3) are preferably usable. Moreover, the positive electrode collection tabs 5A and negative electrode collection tabs 5B may be attached to the respective electrodes using ultrasonic welding, spot welding or the like. It is to be noted that the internal electrode body for use in the present embodiment is not limited to the wound type internal electrode body 1 shown in FIG. 1. As shown in FIG. 3, a lamination type internal electrode body 6 may also be used having a structure in which positive electrode 2 and negative electrode 3 having certain areas and predetermined shapes are alternately laminated via the separator 4. Materials, preparing method and the like for constituting the positive electrode 2 and negative electrode 3 of the lamination type internal electrode body 6 are similar to those of the positive electrode 2 and negative electrode 3 in the wound type internal electrode body 1 shown in FIG. 1.

Next, description is made on a non-aqueous electrolytic solution. As a solvent, there are preferably used: carbonic acid esters such as ethylene carbonate (EC), diethyl carbonate (DEC), dimethyl carbonate (DMC), and propylene carbonate (PC), $\gamma$-butyrolacton, tetrahydrofuran, acetonitrile and the like. These can be used singly or in admixture of two or more kinds. In the present embodiment, especially from viewpoints of solubility of the lithium aluminum compound which is the electrolyte, a use temperature range of the lithium secondary battery 10 (see FIG. 2) and the like, a mixed solvent of annular carbonate with chain carbonate at an optional ratio is preferably usable.

Preferable examples of the electrolyte include: lithium complex fluoride compounds such as lithium hexafluorophosphate ($LiPF_6$) and lithium borofluoride ($LiBF_4$); lithium halides such as lithium perchlorate ($LiClO_4$) and the like. One or two or more of these are dissolved in the above organic solvent (mixed solvent) and used as the electrolytic solution. The use of $LiPF_6$ as the electrolyte is particularly preferable because it hardly causes oxidative decomposition and has a high conductivity in the non-aqueous electrolytic solution.

Moreover, the lithium secondary battery 10 (see FIG. 2) of the present embodiment is usable as a power supply in any application, but when characteristics such as a large capacity, low cost, and high reliability are used, the battery is preferable as a battery to be mounted on a vehicle, and further as a power supply for driving a motor of an electric car or a hybrid electric car. Furthermore, the battery can especially preferably be used in activating an engine requiring a high voltage.

Next, the embodiment of the lithium secondary battery of the present invention (second invention) will be described. The lithium secondary battery of the present embodiment is a lithium secondary battery comprising: a positive active material comprising an lithium aluminum manganese oxide having a spinel structure and an aluminum compound other than the lithium aluminum manganese oxide. The ratio of an aluminum amount contained in the aluminum compound to that contained in the whole positive active material is within a range of from 1% by weight or more to 50% by weight or less. When the present positive electrode substance containing a lithium aluminum manganese oxide wherein a part of Mn is replaced with at lease one metal element other than lithium and aluminum is used to produce a lithium secondary battery, the lithium secondary battery may have the same constitution as that of the lithium secondary battery 10 shown in FIG. 10.

By this constitution, the lithium secondary battery of the present embodiment can produce a function and effect similar to those of the lithium secondary battery 10 shown in FIG. 2.

Said at least one metal element other than Li and may be one member selected from the group consisting of Fe, Ni, Mg, Zn, B, Co, Cr, Si, Ti, Sn, P, V, Sb, Nb, Ta, Mo, W and any combination among those metal element.

It is to be noted that theoretically Fe, Ni, Mg, Zn constitute plus bivalent ions, B, Co, Cr constitute plus trivalent ions, Si, Ti, Sn constitute plus tetravalent ions, P, V, Sb, Nb, Ta constitute plus pentavalent ions, and Mo and W constitute plus hexavalent ions, and these elements are dissolved in $Li_{1+x}Al_yMn_{2-x-y}O_4$. However, Co, Sn sometimes constitute plus bivalent ions, Fe, Sb, and Ti sometimes constitute plus trivalent ions, Mn sometimes constitutes the plus tetravalent or pentavalent ion, and Cr sometimes constitutes the plus pentavalent or hexavalent ion. Therefore, the various substitution elements M may be present in a mixed valency state. The amount of oxygen need not be 4 as in the case of stoichiometric composition and may be partly short or excessive as long as the required crystal structure is maintained.

The respective embodiments of the lithium secondary battery of the present invention (first and second inventions) have been described, but in the lithium secondary battery of the present invention (first and second inventions), the other constitution and shape are not limited to those of the embodiments as long as the battery comprises the positive active material constituted as described above.

[Examples]

The present invention will be described more concretely hereinafter in accordance with examples, but the present invention is not limited to these examples.

(Formation of positive active material)

As the starting materials, lithium carbonate ($Li_2CO_3$), manganese dioxide ($MnO_2$), and aluminum oxide ($Al_2O_3$) (commercial reagents) were used, weighed at a predetermined ratio, thereafter mixed, and fired under an oxidation atmosphere at 850°C for 24 hours to form the present positive active material. In this case, when the respective starting materials are sufficiently mixed and fired, the obtained positive active material is only lithium aluminum manganese oxide ($LiAl_xMn_{2-x}O_4$ (where x denotes the constituting ratio of Al in one molecule, $x \geq 0.01$)), and aluminum compound ($Al_2O_3$) does not remain. Therefore, the respective starting materials were fired in an insufficiently mixed state, that is, in a state in which a part of the staring materials remains non-reacted, and the ratio of the aluminum amount contained in the aluminum compound to that contained in the positive active material was adjusted to form the positive active materials (Examples 1 to 4 and Comparative Examples 2 to 4). It is to be noted that for a boron-containing lithium aluminum manganese oxide, a predetermined amount of boron oxide ($B_2O_3$) was mixed with the starting material, and the positive active materials for Examples 5 and 6 were produced under the same firing conditions as described above. Moreover, for a single-phase lithium aluminum manganese oxide in which the aluminum compound was not left, the starting materials were mixed using an automatic mortar mixer for ten hours, fired under an oxidation atmosphere at 650°C for ten hours, thereafter crushed/mixed for ten hours, and further fired under an oxidation atmosphere at 850°C for 100 hours to produce the positive active materials for Comparative Examples 1 and 5.

Next, a powder X-ray diffraction device (manufactured by Rigaku Denki Kabushiki Kaisha: trade name RINT) was used to measure the positive active materials (Examples 1 to 6 and Comparative Examples 1 to 5). For measurement conditions, CuKα wire was used as an X-ray source, tube voltage was set to 50 kV, tube current was set to 300 mA, diffusion slit was set to 0.5 deg, scattering slit was set to 0.5 deg, light receiving slit was set to 0.15 mm, scanning range was set to 10° to 120°, step width was set to 0.02°, counting time was set to 0.5 sec, and ZnO was used as an internal standard. With respect to an X-ray diffraction pattern of each positive active material (Examples 1 to 6 and Comparative Examples 1 to 5), the lattice constant of the lithium aluminum manganese oxide contained in each positive active material (Examples 1 to 6 and Comparative Examples 1 to 5) was calculated by an X-ray diffraction program (manufactured by Rigaku Denki Kabushiki Kaisha: trade name RINT 2000 series application software WPPF program). Calculation results are shown in Table 1. The lattice constants of Examples 1, 5, 6 and Comparative Example 1 were all 8.245 (Å), those of Examples 2 to 4 and Comparative Examples 3 to 5 were all 8.225 (Å), and that of Comparative Example 2 was 8.246 (Å).

[Table 1]

| | positive active material | Ratio of aluminum amount contained in compound to that contained in whole positive active material (% by weight) | Lattice constant (Å) |
|---|---|---|---|
| Example 1 | $LiAl_{0.01}Mn_{1.99}O_4$ + Al compound | 50 | 8.245 |
| Example 2 | $LiAl_{0.1}Mn_{1.9}O_4$ + Al compound | 50 | 8.225 |
| Example 3 | $LiAl_{0.1}Mn_{1.9}O_4$ + Al compound | 30 | 8.225 |
| Example 4 | $LiAl_{0.1}Mn_{1.9}O_4$ + Al compound | 1 | 8.225 |
| Example 5 | $LiAl_{0.01}Mn_{1.99}O_4$ (B content 0.001) + Al compound | 50 | 8.245 |
| Example 6 | $LiAl_{0.01}Mn_{1.99}O_4$ (B content 0.05) + Al compound | 50 | 8.245 |
| Comparative Example 1 | $LiAl_{0.01}Mn_{1.99}O_4$ | 0 | 8.245 |
| Comparative Example 2 | $LiAl_{0.005}Mn_{1.995}O_4$ + Al compound | 50 | 8.246 |
| Comparative Example 3 | $LiAl_{0.1}Mn_{1.9}O_4$ + Al compound | 52 | 8.225 |
| Comparative Example 4 | $LiAl_{0.1}Mn_{1.9}O_4$ + Al compound | 61 | 8.225 |
| Comparative Example 5 | $LiAl_{0.1}Mn_{1.9}O_4$ | 0 | 8.225 |

EP 1 455 401 A2

Next, for the positive active materials (Examples 1 to 6 and Comparative Examples 1 to 5), the ratio of the aluminum amount contained in the aluminum compound to that contained in the whole positive active material was calculated by the following method.

First, three types of lithium aluminum manganese oxide represented by the formula $LiAl_xMn_{2-x}O_4$ wherein x is 0.1, 0.2, or 0.3 were mixed using the above-described respective starting materials and using the automatic mortar mixer, which would raise the cost in an actual manufacturing process, for ten hours, fired in the oxidation atmosphere at 650°C for ten hours, thereafter crushed/mixed for ten hours, and further fired and produced under an oxidation atmosphere at 850°C for 100 hours. It was confirmed by the X-ray diffraction measurement that the obtained sample had a single phase, and the sample thus produced was treated as a lithium aluminum manganese oxide with a purity of 100%. Thereafter, the lattice constant (d) of thus obtained lithium aluminum manganese oxide was measured, and the following equation (1) was derived from a relation between the constant and an aluminum substitution amount (x) in the general formula $LiAl_xMn_{2-x}O_4$ wherein x has the same meaning mentioned above.

[Equation 1]

$$d = -0.2154x + 8.247 \tag{1}$$

A value of the lattice constant of the lithium aluminum manganese oxide contained in each positive active material (Examples 1 to 6 and Comparative Examples 1 to 5) shown in Table 1 was assigned to the above equation (1) to calculate the aluminum substitution amount (x) of the lithium aluminum manganese oxide contained in each positive active material (Examples 1 to 6 and Comparative Examples 1 to 5). A total aluminum amount of each positive active material was measured by plasma induction emission analysis (ICP), the aluminum substitution amount was subtracted from the total aluminum amount in the substance represented by the above-mentioned formula to obtain the aluminum amount contained in the aluminum compound, and the ratio of the aluminum amount contained in the aluminum compound to the total amount of aluminum contained in the positive active material was calculated using thus obtained results. Results are shown in Table 1. For the calculation results, Examples 1, 2, 5, and 6 and Comparative Example 2 resulted in 50%, Example 2 resulted in 30%, Example 4 resulted in 1%, Comparative Examples 1 and 5 resulted in 0%, Comparative Example 3 resulted in 52%, and Comparative Example 4 resulted in 61%.

(Electrolytic Solution Immersion Experiment of positive active material)

Each produced positive active material (Examples 1 to 6 and Comparative Examples 1 to 5) was immersed by 5 g in 20 ml of a $LiPF_6$/EC+DEC electrolytic solution similar to that for use in manufacturing the battery at 80°C for 40 hours. Thereafter, each positive active material was separated from the electrolytic solution with a paper filter, and cleaned with an EC+DEC mixed organic solvent and EC organic solvent. The separated electrolytic solution was quantized by the plasma induction emission analysis (ICP), and an Mn amount eluted in the electrolytic solution was measured. Measurement results are shown as "manganese dissolution ratio (%)" in Table 2. It is to be noted that "manganese dissolution ratio (%)" means a relative value calculated assuming that a manganese elution amount eluted in the electrolytic solution in which the positive active material of Comparative Example 1 is immersed as 100%. For the measurement results, the manganese dissolution ratio of Example 1 was 97%, that of Example 2 was 34%, that of Example 3 was 31%, that of Example 4 was 38%, that of Example 5 was 88%, that of Example 6 was 27%, that of Comparative Example 2 was 113%, that of Comparative Example 3 was 36%, that of Comparative Example 4 was 33%, and that of Comparative Example 5 was 39%. In this manner, even as compared with the Comparative Examples 1 and 5 in which the starting materials were sufficiently mixed and fired twice to produce only the lithium aluminum manganese oxide, it can be said that manganese elution is suppressed in Examples 1 to 6 produced by simple manufacturing. Especially in Examples 5 and 6 wherein the positive active material contained boron, it can be said that the manganese elution is further suppressed. A similar effect was confirmed also in a case where vanadium other than boron was contained.

[Table 2]

|  | Manganese dissolution ratio | Internal resistance ratio | Discharge capacity maintenance ratio |
|---|---|---|---|
|  | (%) | (%) | (%) |
| Example 1 | 97 | 98 | 75 |
| Example 2 | 34 | 58 | 87 |
| Example 3 | 31 | 46 | 93 |
| Example 4 | 38 | 57 | 91 |
| Example 5 | 88 | 92 | 81 |
| Example 6 | 27 | 45 | 94 |
| Comparative Example 1 | 100 | 100 | 76 |
| Comparative Example 2 | 113 | 102 | 64 |
| Comparative Example 3 | 36 | 108 | 79 |
| Comparative Example 4 | 33 | 132 | 82 |
| Comparative Example 5 | 39 | 59 | 91 |

(Preparation of Coin Cell)

Each positive active material manufactured in the above-described method and acetylene black which was a conduction auxiliary agent and vinylidene polyfluoride which was a binder were mixed at a weight ratio of 50:2:3, and 0.02 g of the mixed sample was press-molded in a disc shape having a diameter of 20 mm by a pressure of 300 kg/cm$^2$ to form the positive electrode. The positive electrode (sample electrode), the non-aqueous electrolytic solution prepared by dissolving LiPF$_6$ which was the electrolyte in an organic solvent of ethylene carbonate (EC) mixed with a diethyl carbonate (DEC) at an equal volume ratio (1:1) to have a concentration of 1 mol/l, the separator for partitioning the positive electrode from the negative electrode, and carbon as a negative electrode were used to prepare a coin cell.

(Measurement of Internal Resistance)

Each manufactured coin cell was charged at a constant current of 1C rate and constant voltage up to 4.1 V in accordance with the capacity of the positive active material, a charge/discharge test was performed only one cycle to discharge 2.5 V similarly at the constant current of 1C rate, and a difference between a potential in a standstill state after charge end and that right after discharge start (potential difference) was divided by the discharge current to obtain an internal resistance. The result is shown as "internal resistance ratio (%)" in Table 2. It is to be noted that "internal resistance ratio (%)" means a relative value calculated assuming that the internal resistance of Comparative Example 1 is 100%. For the measurement results, the internal resistance ratio of Example 1 was 98%, that of Example 2 was 58%, that of Example 3 was 46%, that of Example 4 was 57%, that of Example 5 was 92%, that of Example 6 was 45%, that of Comparative Example 2 was 102%, that of Comparative Example 3 was 108%, that of Comparative Example 4 was 132%, and that of Comparative Example 5 was 59%. In Comparative Examples 3 and 4 in which the ratio of the aluminum amount contained in the compound to that contained in the whole positive active material exceeded 50% by weight, the internal resistance ratio increased.

(High-Temperature Cycle Test of coin cell

The coin cell manufactured in this manner was charged at the constant current of 1C rate and constant voltage up to 4.1 V in accordance with the capacity of the positive active material in a constant temperature bath at 60°C, the charge/discharge test was similarly performed to discharge 2.5 V similarly at the constant current of 1C rate, and this cycle was regarded as one cycle. This was carried out 100 cycles, and the value of the discharge capacity after the elapse of 100 cycles was divided by the value of the initial discharge capacity to calculate the discharge capacity maintenance ratio (%). The results are shown in Table 2. For the measurement results, the discharge capacity maintenance ratio of Example 1 was 75%, that of Example 2 was 87%, that of Example 3 was 93%, that of Example 4 was 91%, that of Example 5 was 81%, that of Example 6 was 94%, that of Comparative Example 1 was 76%, that of Comparative Example 2 was 64%, that of Comparative Example 3 was 79%, that of Comparative Example 4 was 82%, and that of Comparative Example 5 was 91%.

(Discussions)

Since the lithium aluminum manganese oxides of Example 1 and Comparative Example 1, and Examples 2 to 4 and Comparative Example 5 have the identical compositions and lattice constants, as shown in Table 2, it is seen that the present positive active material containing the aluminum compound (Examples 1 to 4) is superior to the positive active material containing substantially no aluminum compound (Comparative Examples 1 and 5) in manganese dissolution ratio and suppression in increasing internal resistance ratio. Reasons for this are supposedly that with the use of a simple manufacturing method, the aluminum compound remaining in the positive active material causes manganese elution, and, for example, an influence onto the positive active material is reduced with respect to HF generated from the electrolytic solution. However, for the positive active material (Comparative Examples 3 and 4) in which the ratio of the aluminum amount contained in the aluminum compound to the total amount of aluminum contained in the positive active material exceeds 50%, the internal resistance ratio is high. When the ratio of the aluminum amount contained in the aluminum compound to the total amount of aluminum contained in the positive active material exceeded 50% and increased, the internal resistance ratio tended to rise. In this case, the aluminum compound supposedly hindered, for example, electron conduction of the positive active material. Moreover, it has been apparent that various properties of the lithium secondary battery such as the manganese dissolution ratio, the suppression in increasing internal resistance ratio, and discharge capacity maintenance ratio are enhanced in a case where the positive active material contains boron and vanadium or either one. The reasons for this are supposedly that the crystallinity of the positive active material itself is enhanced, this further suppresses the elution of manganese from the positive active material, and this enhances various properties of the lithium secondary battery.

Moreover, in the positive active material (Comparative Example 2) containing the lithium aluminum manganese oxide having a lattice constant of 8.426 (Å), the manganese dissolution ratio is high, and the discharge capacity maintenance ratio indicates a minimum value among the present examples and comparative examples.

As described above, in accordance with the present invention, there can be provided a lithium secondary battery which is superior in the suppression of increasing internal resistance ratio and discharge capacity maintenance ratio and which can be manufactured simply at low cost. Since a positive active material for use in the present invention is low in dissolution ratio of manganese into an electrolytic solution, the lithium secondary battery of the present invention has a long life.

A lithium secondary battery superior in the suppression of increasing internal resistance ratio and discharge capacity maintenance ratio and being simple in structure and inexpensive. A lithium secondary battery comprises a positive active material comprising a lithium aluminum manganese oxide having a spinel structure and an aluminum compound other than the lithium aluminum manganese oxide. A ratio of an amount of aluminum contained in the aluminum compound to a total amount of aluminum contained in the positive active material is within a range of 1% by weight or more to 50% by weight or less. The lithium aluminum manganese oxide is represented by a general formula $Li_{1+x}Al_yMn_{2-x-y}O_4$ wherein x and y denote constituting ratios of elements in one molecule, $x \geq 0$, $y \geq 0.01$, and has a lattice constant of 8.245 Å or less. A part of Mn may be replaced with an element other than Li and Al.

## Claims

1. A lithium secondary battery comprising:

    positive active material comprising an lithium aluminum manganese oxide having a spinel structure and an aluminum compound other than the lithium aluminum manganese oxide,

    wherein a ratio of an aluminum amount contained in the aluminum compound to that contained in the whole positive active material is 1% by weight or more and 50% by weight or less, and the lithium aluminum manganese oxide is represented by a general formula $Li_{1+x}Al_yMn_{2-x-y}O_4$ wherein x and y denote constituting ratios of the elements in one molecule, and $x \geq 0$, and $y \geq 0.01$, and has a lattice constant of 8.245 Å or less.

2. The lithium secondary battery according to claim 1, wherein a part of an element Mn in the lithium aluminum manganese oxide is further replaced with at least one metal element other than Li and Al.

3. The lithium secondary battery according to claim 1 or 2, wherein the ratio of the aluminum amount contained in the aluminum compound to the total amount of aluminum contained in the positive active material is within a range of from 1% by weight or more to 30% by weight or less.

4. The lithium secondary battery according to any of claims 1 to 3, wherein the lattice constant is 8.225 Å or less.

5. The lithium secondary battery according to any of claims 1 to 4, wherein the lithium aluminum manganese oxide further contains at least one member selected form the group consisting of boron and vanadium.

6. The lithium secondary battery according to claim 5, wherein a molar ratio of boron and/or vanadium to manganese contained in the positive active material is within a range of from 0.001 to 0.05.

7. The lithium secondary battery according to any of claims 1 to 6, wherein the positive active material is a product obtained by firing a starting material for a lithium aluminum manganese oxide under an oxidation atmosphere at 650 to 1000°C in 5 to 30 hours.

FIG.1

## FIG.2

## FIG.3